# EUROPÄISCHE PATENTSCHRIFT

(11) **EP 2 635 363 B1**
(45) Veröffentlichungstag und Bekanntmachung des Hinweises auf die Patenterteilung: **17.10.2018**
(21) Anmeldenummer: 11787638.3
(22) Anmeldetag: 04.11.2011
(51) Int. Cl.: B01D 46/10, B01D 46/52

(54) **INNENRAUMLUFTFILTER UND FILTERANORDNUNG**
INTERIOR AIR FILTER AND FILTER ARRANGEMENT
FILTRE À AIR POUR ESPACE INTÉRIEUR ET ENSEMBLE FILTRE

(30) Priorität: 04.11.2010 DE 102010050222
(43) Veröffentlichungstag der Anmeldung: 11.09.2013
(73) Patentinhaber: Mann + Hummel GmbH, 71636 Ludwigsburg (DE)
(72) Erfinder: HAIDER, Dominik, 84177 Gottfrieding (DE)
(86) Internationale Anmeldenummer: PCT/EP2011/069410
(87) Internationale Veröffentlichungsnummer: WO 2012/059579

(56) Entgegenhaltungen:
- DE-A1- 3 439 255
- DE-A1-102009 042 588
- DE-U1- 20 320 558
- DE-U1-202005 019 611

## Beschreibung

### Technisches Gebiet

Die vorliegende Erfindung betrifft ein Filterelement, insbesondere einen Innenraumluftfilter zum Filtern von Luft für den Innenraum eines Kraftfahrzeugs. Ferner betrifft die Erfindung eine Filteranordnung mit einem solchen Filterelement.

Ein entsprechendes Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente und -anordnungen anwendbar, wird die vorliegende Erfindung sowie die ihr zugrunde liegende Problematik nachfolgend für ein Filterelement zur Filterung von Luft für den Innenraum eines Kraftfahrzeugs beschrieben. Solche Filter werden nachfolgend auch kurz als Kfz-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, so dass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Faltenpacks der verschiedenen Faltabschnitte des Filtermediums eine Vergrößerung der von dem Luftstrom durchströmten Filterfläche ermöglicht werden. Um entsprechende Filterelemente mit zickzackförmig gefalteten Filtermedien insbesondere montagetechnisch besser handhaben zu können, sind oft Verstärkungselemente an den Seiten des Filterelementes entlang dem Filterpack aus dem gefalteten Medium vorgesehen. Diese Armierungselemente dienen der seitlichen Fixierung und Stabilisierung des zickzackförmigen Filtermediums und sind zum Beispiel mittels eines geeigneten Klebers an den seitlichen Kanten des Faltenpacks angebracht. Man spricht auch von Seitenbändern. Das Filterelement mit an den gefalteten Längsseiten streifenförmig angebrachten Armierungen oder Verstärkungen kann auf diese Weise montagetechnisch einfach ohne es zu beschädigen in ein Gehäuse eines Filtermoduls bzw. einer entsprechenden Filteraufnahme, beispielsweise in ein Filtergehäuse oder eine Klimaanlage eines Kraftfahrzeuges, eingefügt werden.

### Stand der Technik

Aus der DE 10 135 691 ist ein Filtereinsatz für ein Filtergehäuse bekannt, der einen Filterpack aufweist, dessen beiden Außenseiten jeweils mit einem Dichtstreifen versehen sind. Einer der Dichtstreifen weist einen ersten und einen zweiten Schenkel auf, wobei die Breite des ersten Schenkels an die Höhe des Faltenpacks angepasst ist. Der zweite Schenkel weist eine geringere Breite als der erste Schenkel bzw. das Filterpack auf. In dem in das Filtergehäuse eingeschobenen Zustand liegt der zweite Schenkel in einem spitzen Winkel am ersten Schenkel an. Im nicht eingebauten Zustand schließen der erste und der zweite Schenkel miteinander einen stumpfen Winkel ein.

In der DE 195 32 436 C1 ist ein weiterer Filtereinsatz mit einem Faltenpack beschrieben, der entlang seiner beiden Außenseiten jeweils eine Dichtung aufweist. Eine Breite der Dichtung ist größer und höchstens doppelt so groß wie die Höhe der Außenseite des Faltenpacks. Die Dichtung weist eine Faltung auf.

Das in der DE 10 2009 042 588 A1 offenbarte Filterelement hat an zumindest einer Seite ein Rahmenelement, das zur Sicherung eines positionsorientierten Verbaus dienen soll. Dieses Rahmenelement wird durch ein Seitenband des Filterelements, das die Falten des Faltenpacks in Form hält, gebildet. Das Rahmenelement hat gemäß einer ersten Gruppe von Ausführungsformen einen geschlossenen Querschnitt und ist daher schon durch die Kinematik unbeweglich. In einer anderen Gruppe von Ausführungsformen ist das Rahmenelement durch zwei Schenkel gebildet, die gleich lang sind, wobei die Breite beider Schenkel größer ist als eine Höhe des Faltenpacks. Der erste an dem Faltenpack befestigte Schenkel steht hierbei im Bereich der Faltung deutlich über den Faltenpack über, ebenso an der offenen Oberseite. Der Bereich zwischen beiden Schenkeln ist mit einem Füllmaterial gefüllt, das die beiden Schenkel miteinander verbindet und das durch die Faltung entstandene Filmscharnier immobilisiert. Gemäß einer dritten Ausführungsform ist ein dritter Schenkel vorgesehen, der an seinem freien Ende in den Bereich zwischen den beiden ersten Schenkeln eingefaltet ist, um auf das Füllmaterial verzichten zu können.

Ferner ist aus der DE 203 20 558 U1 ein Innenraumfilterelement bekannt, das stirnseitig ein Abdichtungselement aufweist, das aus zwei Schenkeln besteht. Ein erster Schenkel ist mit dem Faltenpack verbunden und ein zweiter Schenkel mit dem ersten Schenkel klappbar verbunden. Beide Schenkel haben eine Breite, die größer ist als die Höhe des Faltenpacks und stehen dadurch oben und unten über den Faltenpack hinaus. In diesen überstehenden Bereichen haben die Schenkel Öffnungen, die beim Zusammenfalten in Überdeckung kommen und durch die Rasthaken eines Gehäusedeckels durchführbar sind. Im verbauten Zustand werden die Schenkel durch den Gehäusedeckel aneinander gepresst um zu dichten, während die Elastizität der Klappverbindung bei der Demontage als Ausziehhilfe wirkt.

Ferner ist aus der DE 20 2005 019 611 U1 des Weiteren ein Filterelement mit einem entlang der Querseite winklig beschnittenen Balg (schräg stehendes Seitenband) und ein hiermit korrespondierender Filteraufnahmeraum einer Klimaanlage bekannt, der eben diesen Beschnittwinkel des Balges aufnimmt, sodass nur mit einem derart winklig beschnittenen Balg eine hinreichende Abdichtung erreicht werden kann.

Mit den zuvor beschriebenen Lösungen kann bei richtigem Einbau in ein Filtergehäuse eine Abdichtung des Faltenpacks gewährleistet werden. Jedoch ist diese Abdichtung bei den beschriebenen Lösungen nur bei vorgeschriebener Einbaurichtung sichergestellt und beispielsweise bei einem Einbau entgegen einer vorgesehenen Durchströmrichtung wirkungslos. Da die abstehenden Schenkel der beschriebenen Lösung bei einem Einbau einfach an die Außenwände des Filterpacks gedrückt werden können, ist aber ein falscher Einbau jederzeit möglich.

Aus der DE10 2009 042588 A1 ist ein Filterelement bekannt, bei dem an den Rand des Faltenpacks definierte geometrisch geformte Randelemente angebracht werden.

### Offenbarung der Erfindung

Vor diesem Hintergrund liegt der vorliegenden Erfindung die Aufgabe zugrunde, ein verbessertes Filterelement zu schaffen, das bei gebotenem Verdrehschutz produktionstechnisch geschickt und kostengünstig realisierbar ist. Diese Aufgabe wird durch den Gegenstand des unabhängigen Anspruchs 1 gelöst. Die weitere Aufgabe, eine korrespondierende Filteranordnung zu schaffen, wird durch den Gegenstand des Anspruchs 4 gelöst.

Demgemäß wird ein Filterelement mit einem Faltenpack vorgeschlagen, bei dem an wenigstens einer ersten Seite des Faltenpacks ein Materialstreifen mit einem ersten Schenkel und mit einem zweiten Schenkel angeordnet ist, wobei der erste Schenkel an der ersten Seite befestigt ist und der zweite Schenkel eine Breite aufweist, die größer als eine Höhe des Faltenpacks ist. Der erste Schenkel weist hierbei eine Breite auf, die kleiner oder gleich der Höhe des Faltenpacks ist.

Das Filterelement ist insbesondere als Innenraumluftfilter für ein Kraftfahrzeug ausgestaltet. Im Betrieb des Filterelements wird durch das Faltenpack in einer vorgegebenen Durchströmrichtung ein zu filterndes Fluid durchgeleitet.

Dadurch, dass der zweite Schenkel breiter als eine Höhe des Faltenpacks ist, wird verhindert, dass er so an die Seite des Faltenpacks bzw. den ersten Schenkel herangefaltet werden kann, dass er nicht oben oder unten über das Faltenpack hinaus steht. Vielmehr verbleibt bei einer Herabfaltung des zweiten Schenkels bis zu einer Auflagefläche des Filterelements ein gewisser Restwinkel zwischen erstem und zweitem Schenkel. Bei entsprechender Ausgestaltung einer Filteraufnahme kann somit eine eindeutige Lage für einen Einbau in das Gehäuse definiert werden. Somit wird der Einbau des Filterelements entgegen einer vorgesehenen Durchströmrichtung verhindert, was beispielsweise die Betriebssicherheit des Filters erhöht und den Einbau vereinfacht. Man erreicht eine verdrehsichere Anordnung.

Beispielsweise ist der Materialstreifen als ein Dichtstreifen des Filterelements ausgeführt. Damit erfüllt der Materialstreifen neben der Funktion des gesicherten Einbaus des Filterelements auch eine Abdichtung zwischen dem Filterelement und einer zugehörigen Filteraufnahme im eingebauten Zustand. Der Materialstreifen kann auch aus dem gleichen Material wie das Faltenpack gebildet sein.

Das Faltenpack des Filterelements kann ein Kopfband und/oder ein Seitenband aufweisen, welches eine Stirnseite des Faltenpacks bzw. die Faltenprofile des Faltenpacks umschließen, vorzugsweise vollständig entlang der jeweiligen Seite. Gemäß einer Ausführungsform des Filterelements wird ein Kopfband des Faltenpacks oder ein Seitenband des Faltenpacks zumindest teilweise durch den Materialstreifen ausgebildet. Damit lässt sich ein Filterelement mit geringem Produktionsaufwand herstellen.

Vorzugsweise ist der Materialstreifen des Filterelements derart gestaltet, dass der Materialstreifen eine Faltung zwischen dem ersten und dem zweiten Schenkel aufweist. Insbesondere ist der Materialstreifen vorzugsweise einstückig ausgeführt, so dass sich der erste und der zweite Schenkel durch die Faltung ergeben.

Erfindungsgemäß umfasst der Materialstreifen genau einen ersten Schenkel und einen zweiten Schenkel und der durch den ersten Schenkel und den zweiten Schenkel aufgespannte Winkel ist variabel. Hierdurch lässt sich produktionstechnisch geschickt und kostengünstig eine Bauform realisieren, mit dem Verdrehsicherheit möglich ist.

Erfindungsgemäß liegt die Faltung an einer Oberkante des Faltenpacks oder an einer Unterkante des Faltenpacks. Die Faltung, die einen Scheitelpunkt des ersten und zweiten Schenkels darstellt, schließt somit randseitig mit dem Faltenpack ab. Dadurch entsteht bei einem Herunterfalten des zweiten Schenkels auf eine der Faltungskante gegenüberliegenden Auflagefläche eine trapezartige Querschnittsform des Filterelements.

Erfindungsgemäß beträgt ein Verhältnis der Breite des zweiten Schenkels zur Höhe des Faltenpacks 1,3 bis 1,8. Bei dem vorgeschlagenen Verhältnisbereich ergibt sich im eingebauten Zustand des Filterelements ein günstiger Winkel zwischen erstem und zweitem Schenkel des Filterelements. Insbesondere sind die Einbausicherheit des Filterelements sowie eine ausreichende Stabilität des Materialstreifens gewährleistet.

Gemäß einer weiteren Ausführungsform des Filterelements ist an einer zweiten Seite des Faltenpacks ein weiterer Materialstreifen mit einem weiteren ersten Schenkel, der an der zweiten Seite befestigt ist, und mit einem weiteren zweiten Schenkel angeordnet, der eine Breite aufweist, die größer als die Höhe des Faltenpacks ist. Durch den weiteren Materialstreifen, der beispielsweise wie der erste Materialstreifen aufgebaut ist, kann die Einbausicherheit des Filterelements in eine Filteraufnahme weiter erhöht werden. Die zweite Seite kann eine der ersten Seite gegenüberliegende Seite des Faltenpacks sein. Alternativ können die erste und die zweite Seite auch eine gemeinsame Kante an einer Ecke des Faltenpacks aufweisen. Die Länge des zweiten Schenkels des ersten Materialstreifens kann gleich oder verschieden sein von der Breite des zweiten Schenkels des zweiten Materialstreifens.

Gemäß einer weiteren Ausführungsform des Filterelements weist der Materialstreifen einen dritten Schenkel auf. Ein Scheitelpunkt zwischen dem zweiten und dem dritten Schenkel liegt an der dem ersten Schenkel abgewandten Seite des zweiten Schenkels. Vorzugsweise weist dazu der Materialstreifen eine weitere Faltung auf, welche den Scheitelpunkt des dritten Schenkels mit dem zweiten Schenkel bildet. Insbesondere, wenn der Materialstreifen als Dichtstreifen ausgebildet ist, kann so eine Abdichtung zwischen dem Filterelement und einer Filteraufnahme verbessert werden. Zusätzlich lässt sich so auch die Stabilität des Filterelements erhöhen.

Eine mögliche Filteraufnahme für das oben beschriebene Filterelement weist eine Einbau- und Entnahmeöffnung für das Filterelement auf. Die Filteraufnahme umfasst eine abgeschrägte Wand, die in einem Winkel verläuft, der im Wesentlichen einem Winkel entspricht, den der zweite Schenkel des Filterelements mit einer Auflagefläche des Filterelements bildet.

Damit kann bei einem Einbau des Filterelements in die Filteraufnahme der zweite Schenkel des Filterelements entlang der abgeschrägten Wand verlaufen und so einen passgenauen Einbau ermöglichen. Bei einer Ausführungsform der Filteraufnahme verläuft die abgeschrägte Wand parallel zu einer Einbau- und Entnahmerichtung für das Filterelement. Anders ausgedrückt ist bei einem Blick in der Einbau- und Entnahmerichtung ein trapezförmiger Querschnitt des Filterelements sichtbar. Beispielsweise weist in diesem Fall die Einbau- und Entnahmeöffnung einen entsprechenden trapezförmigen Querschnitt auf.

Ferner kann die abgeschrägte Wand der Einbau- und Entnahmeöffnung gegenüber liegen. In diesem Fall wird das Filterelement bei einem Einbau mit der ersten Seite, an der der Materialstreifen angebracht ist, zuerst in die Filteraufnahme eingebracht. Die abgeschrägte Wand bildet in diesem Fall eine Art Anschlag für das Filterelement bzw. den zweiten Schenkel.

Noch weiter kann die Filteraufnahme für ein oben beschriebenes Filterelement mit Materialstreifen an zwei Seiten geeignet sein. Demnach weist die Filteraufnahme eine weitere abgeschrägte Wand auf, die in einem Winkel verläuft, der im Wesentlichen einem Winkel entspricht, den der weitere zweite Schenkel des Filterelements mit einer Auflagefläche des Filterelements bildet.

Es wird weiterhin eine Filteranordnung vorgeschlagen, die ein Filterelement nach einem der oben beschriebenen Ausführungsbeispiele sowie eine Filteraufnahme der beschriebenen Art aufweist.

In einer Ausgestaltung einer solchen Filteranordnung liegt in einem eingebauten Zustand des Filterelements der zweite Schenkel des Filterelements an der abgeschrägten Wand der Filteraufnahme an.

In einer weiteren Ausgestaltung einer solchen Filteranordnung ist das Filterelement in der Filteraufnahme angeordnet.

Eine Filteraufnahme der oben beschriebenen Art kann Teil eines Filtergehäuses sein oder ein Filtergehäuse darstellen. Demnach kann die abgeschrägte Wand auch eine Wand sein, die nicht an der Außenseite eines Filtergehäuses liegt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung.

### Kurze Beschreibung der Zeichnungen

Im Weiteren wird die Erfindung anhand von Ausführungsbeispielen unter Bezugnahme auf die beigelegten Figuren näher erläutert.

Es zeigen dabei:
- Figur 1: eine schematische perspektivische Darstellung einer ersten Ausführungsform eines Filterelements;
- Figur 2: eine beispielhafte Querschnittsansicht eines Materialstreifens;
- Figur 3: eine schematische perspektivische Darstellung einer weiteren Ausführungsform eines Filterelements;
- Figur 4: eine Ausschnittsdarstellung einer Ausführungsform eines Filterelements mit Materialstreifen;
- Figur 5: eine drittes Ausführungsform eines Filterelements;
- Figur 6: eine Ausschnittsdarstellung eines Filterelements mit Materialstreifen (nicht erfindungsgemäß);
- Figur 7: eine erste Ausführungsform einer Filteraufnahme;
- Figur 8: eine zweite Ausführungsform einer Filteraufnahme;
- Figur 9: eine schematische perspektivische Darstellung einer Ausführungsform einer Filteranordnung mit einem Filterelement und einer Filteraufnahme; und
- Figur 10: einen Querschnitt einer Filteranordnung im eingebauten Zustand eines Filterelements.

In den Figuren bezeichnen dieselben Bezugszeichen gleiche oder funktionsgleiche Elemente, soweit nichts Gegenteiliges angegeben ist.

### Ausführungsform(n) d r Erfindung

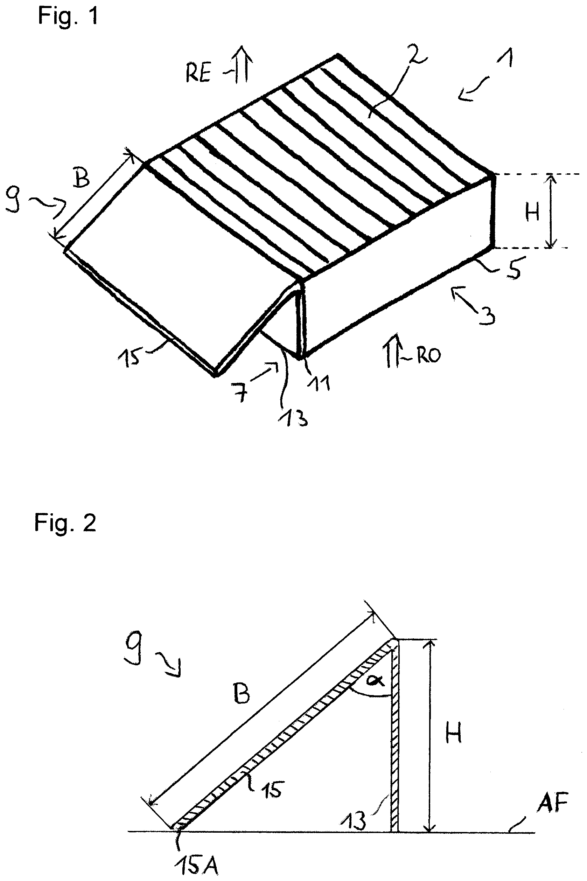

Figur 1 zeigt eine schematische perspektivische Darstellung einer ersten Ausführungsform eines Filterelements. Das Filterelement 1 umfasst ein Faltenpack 2 aus zickzackförmig gefaltetem Filtermaterial. Das Filtermaterial kann ein Filter-Vlies-Material sein, das für die Filterung von Rohfluid, beispielsweise Innenraumluft, Außenluft oder auch Verbrennungsluft für Kraftfahrzeuge geeignet ist. Das Faltenpack 2 kann dabei ein mehrlagiges Filtermaterial umfassen, bei dem Absorberpartikel zwischen verschiedenen Schichten angeordnet sind.

Beispielsweise wird Rohfluid RO in der Orientierung der Figur 1 von unten zu dem Faltenpack 2 geführt, das Fluid durchströmt das Faltenpack 2 und Schmutzstoffe werden in dem Filtermaterial gehalten. Als Reinfluid RE tritt das gefilterte Fluid, wie Innenraumluft für Kraftfahrzeuge, nach oben aus. Selbstverständlich kann der Fluidstrom auch in anderer Richtung verlaufen, als in der Figur 1 dargestellt ist.

Das Faltenpack 2 weist eine erste Seite 3 auf, auf der ein Seitenband 5 nicht sichtbare Faltenprofile des Faltenpacks 2 verschließt. Das Seitenband 5 ist beispielsweise auf die Faltenprofile geklebt. In der Regel ist das Seitenbandmaterial etwas starrer als das Filtermaterial. Prinzipiell können jedoch dieselben Materialien verwendet werden. Ferner weist das Filterelement 1 eine Seite 7 auf, an der ein Materialstreifen 9 angeordnet ist. Der Materialstreifen 9 ist an einem verdeckten Kopfband 11 des Faltenpacks 2 befestigt und weist einen ersten Schenkel 13 und einen zweiten Schenkel 15 auf. Ein Material des Kopfbands 11 kann dem des Seitenbands 5 entsprechen. Das Faltenpack 2 bzw. das Filterelement 1 weisen eine Höhe H auf. Eine Breite des ersten Schenkels 13 ist ebenfalls an die Höhe H angepasst. Eine Breite B des zweiten Schenkels ist größer als die Höhe H.

Im vorliegenden Ausführungsbeispiel ist der Materialstreifen 9 einstückig ausgeführt, wobei die Schenkel 13, 15 durch eine Faltung des Materialstreifens 9 gebildet sind, die an der Oberkante des Filterelements 1 bzw. des Faltenpacks 2 anliegt.

Das Filterelement 1 ist insbesondere ein Innenraumluftfilter für ein Kraftfahrzeug.

Figur 2 zeigt eine beispielhafte Querschnittsansicht eines Materialstreifens 9, bei der relative Größenverhältnisse des ersten und zweiten Schenkels 13, 15 deutlich werden. Der erste Schenkel 13 mit der Breite H und der zweite Schenkel 15 mit der Breite B sind bei der vorliegenden Darstellung derart zueinander gefaltet, dass eine Spitze oder Endkante 15A des zweiten Schenkels 15 auf eine Verlängerung einer Auflagefläche AF des Filterelements 1 auftrifft. Dabei ergibt sich in der Faltung ein Winkel α, der vorliegend ein spitzer Winkel ist. Ein Verhältnis zwischen B und H liegt vorzugsweise im Bereich 1,05 bis 2,0 und weiter vorzugsweise im Bereich 1,3 bis 1,8. Vorliegend beträgt das Verhältnis zwischen B und H in Figur 2 etwa 1,5.

Bei einer Filteraufnahme, welches eine der Höhe H angepasste Einbauhöhe oder Einbau- und Entnahmeöffnung aufweist, kann das Filterelement 1 nicht derart eingebaut werden, dass der zweite Schenkel 15 flach an den ersten Schenkel 13 angedrückt wird, da in diesem Fall der zweite Schenkel 15 über das Filterelement 1 hinausstehen würde. Für den Einbau des Filterelements 1 kann somit eine entsprechend geometrisch angepasste Filteraufnahme bereitgestellt werden. Mit einer solchen Filteraufnahme kann daher eine Einbaurichtung bzw. eine Einbauorientierung des Filterelements in eine Filteraufnahme vorgegeben werden, um so einen verkehrten Einbau des Filterelements zu verhindern. Man erreicht einen Verdrehschutz.

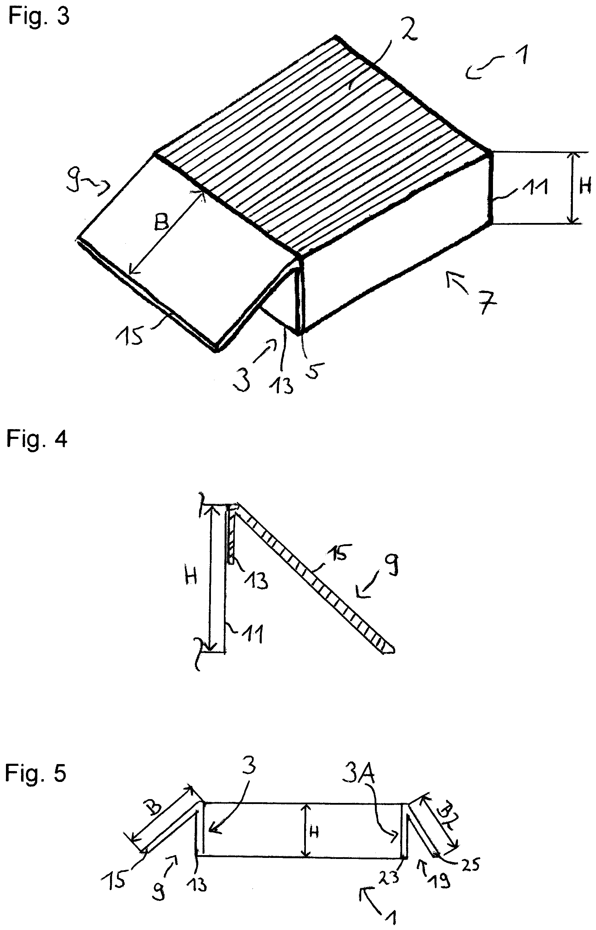

Figur 3 zeigt eine schematische perspektivische Darstellung einer weiteren Ausführungsform eines Filterelements. Abweichend von der Darstellung in Figur 1 ist der Materialstreifen 9 vorliegend an einem Seitenband 5 des Faltenpacks 2 angebracht. Insbesondere verstärkt der erste Schenkel 13 des Materialstreifens 9 das Seitenband 5 des Faltenpacks 2. Wie auch in Figur 1 ist die Breite B des zweiten Schenkels 15 größer als die Höhe H des Filterelements 1 bzw. des Faltenpacks 2.

Figur 4 zeigt eine Ausschnittsdarstellung einer Ausführungsform eines Filterelements 1 mit Materialstreifen 9. In dieser Ausführungsform ist die Breite des ersten Schenkels 13, der auf dem Kopfband 11 des Filterelements 1 angebracht ist, kleiner als die Höhe H des Faltenpacks. Dadurch kann der Materialstreifen 9 mit weniger Material hergestellt werden, insbesondere, wenn ein separates Kopfband 11 ausgebildet ist. Selbstverständlich lässt sich diese Ausführungsform auch auf die Darstellung der Figur 3 übertragen, so dass der kurze erste Schenkel 13 auf ein Seitenband 5 aufgebracht ist.

Figur 5 zeigt eine weitere Ausführungsform eines Filterelements 1, bei dem neben dem ersten Materialstreifen 9 ein zweiter Materialstreifen 19 auf einer gegenüberliegenden Seite 3A des Filterelements 1 vorgesehen ist. Der weitere, zweite Materialstreifen 19 weist einen ersten Schenkel 23 und einen zweiten Schenkel 25 auf. Eine Breite des ersten Schenkels 23 ist wie die des ersten Schenkels 13 an die Höhe H des Filterelements angepasst bzw. ist im Wesentlichen gleich dieser Höhe H. Der zweite Schenkel 25 weist eine Breite B2 auf, die wiederum größer als die Höhe H ist. Vorliegend ist die Breite B2 kleiner als die Breite B, wobei in alternativen Ausgestaltungen die Breiten B und B2 gleich oder in anderem Größenverhältnis zueinander gewählt werden können.

In der Figur 5 ist es offen gelassen, ob die Materialstreifen 9, 19 auf Seitenbänder oder Kopfbänder des Faltenpacks aufgebracht sind. Beide Varianten sind hier möglich. Im Übrigen können in den zuvor beschriebenen Ausführungsbeispielen die Seitenbänder und/oder Kopfbänder des Faltenpacks 2 durch den jeweiligen ersten Schenkel 13 bzw. 23 des Materialstreifens gebildet sein, so dass die Ausbildung eines separaten Kopfbands bzw. Seitenbands entfallen kann. Insbesondere ist es in diesem Fall vorteilhaft, wenn der Materialstreifen mit einem Dichtmaterial ausgebildet ist und als Dichtstreifen für das Faltenpack 2 wirkt.

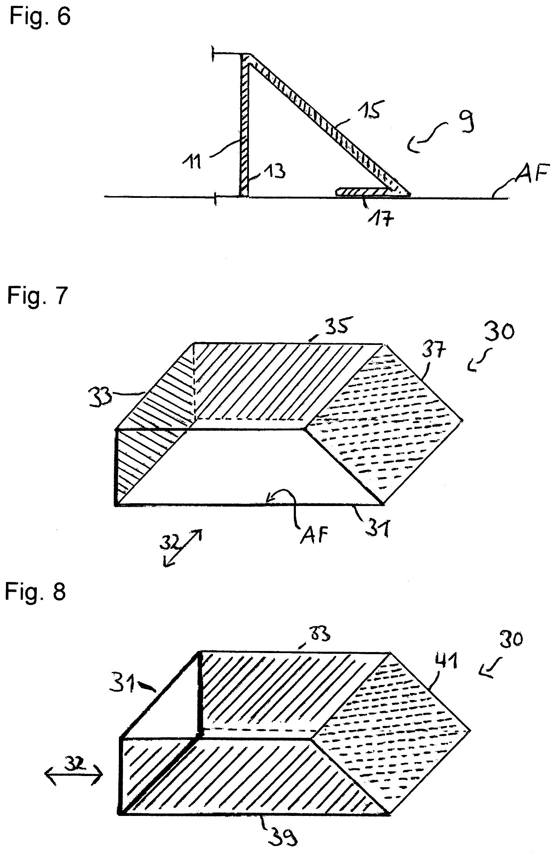

Die Figur 6 zeigt eine Ausschnittsdarstellung eines Filterelements 1 mit Materialstreifen 9, welches nicht erfindungsgemäß ist. Hierbei ist der Materialstreifen 9 mit drei Schenkeln 13, 15, 17 ausgeführt, wobei der dritte Schenkel 17 durch eine weitere Faltung am zweiten Schenkel 15 ausgebildet ist. Eine Breite des dritten Schenkels 17 ist vorzugsweise so gewählt, dass sie kürzer als die Breite des zweiten Schenkels ist, insbesondere aber derart, dass ein Anstoßen am ersten Schenkel verhindert wird. Entsprechende Werte lassen sich durch einfache geometrische Betrachtungen, beispielsweise anhand von Figur 6, ermitteln. Durch den dritten Schenkel 17 kann insbesondere bei einer Ausbildung als Dichtmaterial eine verbesserte Abdichtwirkung im eingebauten Zustand des Filterelements erreicht werden. Der dritte Schenkel 17 liegt beispielsweise flach auf der Auflagefläche AF auf.

In Figur 7 ist ein Ausführungsbeispiel einer Filteraufnahme 30 für Filterelemente der zuvor beschriebenen Art dargestellt. Die Filteraufnahme 30 weist eine Einbau- und Entnahmeöffnung 31 auf, welche einen trapezförmigen Querschnitt aufweist, insbesondere den Querschnitt eines rechtwinkligen Trapezes. Ferner sind in Figur 7 eine vorgesehene Einbau- und Entnahmerichtung 32 sowie Seiten- und Rückwände 33, 35 dargestellt. Die Filteraufnahme 30 weist zudem eine abgeschrägte Wand 37 auf, die in einem Winkel verläuft, der im Wesentlichen einem Winkel entspricht, den der zweite Schenkel eines zum Einbau vorgesehenen Filterelements mit einer Auflagefläche AF des Filterelements bildet. Im vorliegenden Ausführungsbeispiel verläuft die abgeschrägte Wand 37 parallel zu der Einbau- und Entnahmerichtung 32.

In Figur 8 ist ein zweites Beispiel einer Filteraufnahme dargestellt. Die Filteraufnahme 30 weist eine Einbau- und Entnahmeöffnung 31 auf, welche rechteckförmig gestaltet ist. Eine Einbau- und Entnahmerichtung 32 verläuft senkrecht zu dem von der Einbau- und Entnahmeöffnung 31 gebildeten Querschnitt. Die Filteraufnahme 30 weist ferner Seitenwände 33, 39 sowie eine abgeschrägte Wand 41 auf. Die abgeschrägte Wand 41 liegt der Einbau- und Entnahmeöffnung 31 gegenüber. Demnach ist es vorgesehen, dass ein Filterelement mit der Seite, auf der der zweischenklige Materialstreifen aufgebracht ist, voran in die Filteraufnahme 30 eingeführt wird.

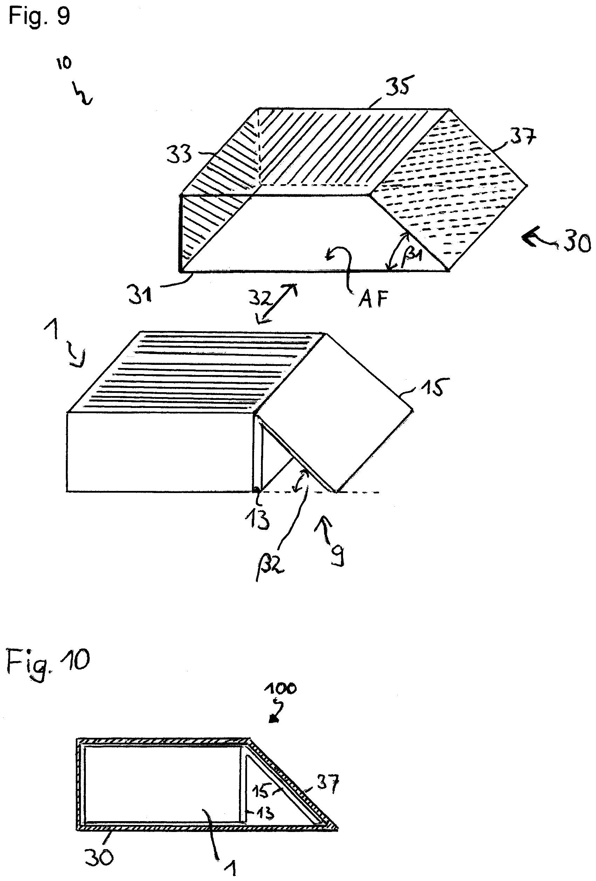

Figur 9 zeigt eine schematische perspektivische Darstellung einer Ausführungsform einer Filteranordnung 10 mit einem Filterelement 1 und einer Filteraufnahme 30. Die abgeschrägte Wand 37 der Filteraufnahme 30 verläuft in einem Winkel β1 zu seiner Grundfläche, welche gleichzeitig eine Auflagefläche AF für das Filterelement 1 bildet. Bei dem Filterelement 1 bildet der zweite Schenkel 15 des Materialstreifens 9 mit der Auflagefläche einen Winkel β2, der im Wesentlichen dem Winkel β1 entspricht. Insbesondere können die Winkel β1 und β2 durch Fertigungstoleranzen voneinander abweichen. Ebenso ist vorliegend die lichte Höhe der Einbau- und Entnahmeöffnung 31 bzw. der Filteraufnahme 30 an sich an die Höhe H des Filterelements 1 angepasst. Damit ergibt sich auch, dass die Breite B des zweiten Schenkels 15 im Wesentlichen der entsprechenden Breite der abgeschrägten Wand 37 entspricht. Folglich ist ein passgenauer Einbau des Filterelements 1 in die Filteraufnahme 30 möglich. Insbesondere wird aber erreicht, dass das Filterelement 1 in keiner anderen Orientierung als in der dargestellten in die Filteraufnahme eingebracht werden kann. Dadurch wird ein fehlerhafter Einbau eines solchen Filterelements 1 in ein entsprechendes Gehäuse 30 verhindert.

Figur 10 zeigt einen Querschnitt einer Filteranordnung 10 mit dem Filterelement 1 im eingesetzten Zustand. Hierbei wird der passgenaue Einbau des Filterelements 1 in der Filteraufnahme 30 sichtbar. Insbesondere liegt der zweite Schenkel 15 des Filterelements 1 an der abgeschrägten Wand 37 an.

Obwohl die vorliegende Erfindung anhand bevorzugter Ausführungsbeispiele näher erläutert wurde, ist sie nicht darauf beschränkt, sondern vielfältig modifizierbar. Es können andere als die dargestellten Geometrien für Filterelemente und Gehäuse gewählt werden. Dabei können die Gegebenheiten am Einbauort des Filters berücksichtigt werden. Die genannten Materialien für das Seiten- und das Kopfbandmaterial und das Filtermedium sind nur beispielhaft zu verstehen. Die beschriebenen Filterelemente sind insbesondere als Innenraumluftfilter für ein Kraftfahrzeug geeignet.

## Patentansprüche

1. Innenraumluftfilter (1) für ein Kraftfahrzeug mit einem Faltenpack (2), wobei an wenigstens einer ersten Seite (3, 7) des Faltenpacks (2) ein Materialstreifen (9) mit einem ersten Schenkel (13) und mit einem zweiten Schenkel (15) angeordnet ist, wobei zwischen dem ersten und zweiten Schenkel (13, 15) eine Faltung an einer Oberkante oder einer Unterkante des Faltenpacks (2) vorliegt, die randseitig mit dem Faltenpack (2) abschließt,
- wobei der erste Schenkel (13) an der ersten Seite (3, 7) befestigt ist und
- der zweite Schenkel (15) eine Breite (B) aufweist, die größer als eine Höhe (H) des Faltenpacks (2) ist,
- und der erste Schenkel (13) eine Breite aufweist, die kleiner oder gleich der Höhe (H) des Faltenpacks ist,
- wobei ein Verhältnis der Breite (B) des zweiten Schenkels (15) zur Höhe (H) des Faltenpacks (2) 1,3 bis 1,8 beträgt
- und wobei der Materialstreifen (9) genau einen ersten Schenkel (13) und einen zweiten Schenkel (15) umfasst,
- wobei der durch den ersten Schenkel (13) und den zweiten Schenkel (15) aufgespannte Winkel variabel ist.

2. Innenraumluftfilter (1) nach Anspruch 1, wobei der Materialstreifen (9) zumindest teilweise ein Kopfband (11) oder ein Seitenband (5) des Faltenpacks (2) ausbildet.

3. Innenraumluftfilter (1) nach Anspruch 1 oder 2, wobei an einer zweiten Seite (3A) des Faltenpacks (2) ein weiterer Materialstreifen (19) mit einem weiteren ersten Schenkel (23), der an der zweiten Seite (3A) befestigt ist, und mit einem weiteren zweiten Schenkel (25) angeordnet ist, der eine Breite (B2) aufweist, die größer als die Höhe (H) des Faltenpacks (2) ist.

4. Filteranordnung mit einem Innenraumluftfilter (1) nach einem der Ansprüche 1 - 3 und einer Filteraufnahme (30), die eine Einbau- und Entnahmeöffnung (31) für den Innenraumluftfilter (1) aufweist, wobei die Filteraufnahme (30) eine abgeschrägte Wand (37, 41) aufweist, die in einem Winkel (β1) verläuft, der im Wesentlichen einem Winkel (β2) entspricht, den der zweite Schenkel (15) des Innenraumluftfilters (1) mit einer Auflagefläche des Innenraumluftfilters (1) bildet.

5. Filteranordnung (100) nach Anspruch 4, bei der in einem eingebauten Zustand des Innenraumluftfilters (1) der zweite Schenkel (15) des Innenraumluftfilters (1) an der abgeschrägten Wand (37) anliegt.

6. Filteranordnung (100) nach Anspruch 4 oder 5, bei der der Innenraumluftfilter (1) in der Filteraufnahme (30) angeordnet ist.

## Claims

1. Interior air filter (1) for a motor vehicle with a pleated pack (2), wherein a material strip (9) with a first leg (13) and with a second leg (15) is disposed on at least one first side (3, 7) of the pleated pack (2), wherein between the first and second leg (13, 15) a folding is provided at an upper edge or at a lower edge of the pleated pack (2) which closes off at the edge with the pleated pack (2),
- wherein the first leg (13) is attached to the first side (3, 7) and
- the second leg (15) features a width (B) which is larger than a height (H) of the pleated pack (2),
- and the first leg (13) features a width which is smaller than or equal to the height (H) of the pleated pack,
- wherein the width (B) of the second leg (15) relative to the height (H) of the pleated pack (2) is 1.3 to 1.8
- and wherein the material strip (9) comprises exactly a first leg (13) and a second leg (15),
- wherein the angle spanned by the first leg (13) and the second leg (15) is variable.

2. Interior air filter (1) according to claim 1, wherein the material strip (9) at least partially forms a headband (11) or a sideband (5) of the pleated pack (2).

3. Interior air filter (1) according to claim 1 or 2, wherein on a second side (3A) of the pleated pack (2) is disposed a further material strip (19) with a further first leg (23), which is attached to the second side (3A), and with a further second leg (25), which features a width (B2) greater than the height (H) of the pleated pack (2).

4. Filter arrangement having an interior air filter (1) according to one of claims 1 - 3 and a filter seat (30) featuring an installation and extraction opening (31) for the interior air filter (1), wherein the filter seat (30) features a beveled wall (37, 41) extending at an angle (β1) substantially corresponding to an angle (β2) formed by the second leg (15) of the interior air filter (1) with a contact surface of the interior air filter (1).

5. Filter arrangement (100) according to claim 4, in which, in an installed state of the interior air filter (1), the second leg (15) of the interior air filter (1) abuts the beveled wall (37).

6. Filter arrangement (100) according to claim 4 or 5, in which the interior air filter (1) is disposed in the filter seat (30).

## Revendications

1. Filtre à air pour espace intérieur (1) pour un véhicule automobile avec un ensemble de plis (2), une bande de matériau (9) avec une première branche (13) et une seconde branche (15) étant disposée sur au moins un premier côté (3, 7) de l'ensemble de plis (2), entre la première et la seconde branche (13, 15), un pliage se trouvant sur un bord supérieur ou un bord inférieur de l'ensemble de plis (2) qui se termine du côté du bord avec l'ensemble de plis (2),
- la première branche (13) étant fixée au premier côté (3, 7), et
- la seconde branche (15) présentant une largeur (B) qui est supérieure à une hauteur (H) de l'ensemble de plis (2),
- et la première branche (13) présentant une largeur inférieure ou égale à la hauteur (H) de l'ensemble de plis,
- la largeur (B) de la seconde branche (15) par rapport à la hauteur (H) de l'ensemble de plis (2) étant de 1,3 à 1,8
- et la bande de matériau (9) comprenant exactement une première branche (13) et une seconde branche (15),
- l'angle couvert par la première branche (13) et la seconde branche (15) étant variable.

2. Filtre à air pour espace intérieur (1) selon la revendication 1, la bande de matériau (9) formant au moins partiellement un bandeau (11) ou une bande latérale (5) de l'ensemble de plis (2).

3. Filtre à air pour espace intérieur (1) selon la revendication 1 ou 2, sur un second côté (3A) de l'ensemble de plis (2) étant disposée une autre bande de matériau (19) avec une autre première branche (23) fixée sur le second côté (3A), et avec une autre seconde branche (25) qui présente une largeur (B2) supérieure à la hauteur (H) de l'ensemble de plis (2).

4. Ensemble de filtre avec un filtre à air pour espace intérieur (1) selon l'une des revendications 1 à 3 et un logement de filtre (30) ayant une ouverture d'installation et d'extraction (31) pour le filtre à air pour espace intérieur (1), le logement de filtre (30) présentant une paroi biseautée (37, 41) s'étendant selon un angle (β1) correspondant sensiblement à un angle (β2) formé par la seconde branche (15) du filtre à air pour espace intérieur avec une surface d'appui du filtre à air pour espace intérieur (1).

5. Ensemble de filtre (100) selon la revendication 4, dans lequel la seconde branche (15) du filtre à air pour espace intérieur (1) s'appuie contre la paroi biseautée (37) dans un état monté du filtre à air pour espace intérieur (1).

6. Ensemble de filtre (100) selon la revendication 4 ou 5, dans lequel le filtre à air pour espace intérieur (1) est disposé dans le logement de filtre (30).
